(19) Europäisches Patentamt / European Patent Office / Office européen des brevets

(11) **EP 2 941 067 B1**

(12) **FASCICULE DE BREVET EUROPEEN**

(45) Date de publication et mention de la délivrance du brevet:
**15.08.2018 Bulletin 2018/33**

(51) Int Cl.:
***H04W 56/00*** *(2009.01)*

(21) Numéro de dépôt: **15165459.7**

(22) Date de dépôt: **28.04.2015**

(54) **ESTIMATEUR DE FRÉQUENCE POUR COMMUNICATION AÉRONAUTIQUE**

FREQUENZSCHÄTZER FÜR LUFTFAHRT-KOMMUNIKATION

FREQUENCY ESTIMATOR FOR AERONAUTICAL COMMUNICATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.04.2014 FR 1401007**

(43) Date de publication de la demande:
**04.11.2015 Bulletin 2015/45**

(73) Titulaire: **THALES**
**92400 Courbevoie (FR)**

(72) Inventeurs:
- **Hirsch, Antonin**
  **31037 Toulouse Cedex (FR)**
- **Arnaud, Mathieu**
  **31037 Toulouse (FR)**
- **Rosset, Pierre-Alexandre**
  **31400 Toulouse (FR)**
- **Zouitane, Khaled**
  **78800 Houilles (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A1- 2008 211 719**

- **RYU C D ET AL: "Hardware efficient frequency estimator based on data-aided algorithm for digital video broadcasting system", CIRCUITS AND SYSTEMS, 2008. APCCAS 2008. IEEE ASIA PACIFIC CONFERENCE ON, IEEE, PISCATAWAY, NJ, USA, 30 novembre 2008 (2008-11-30), pages 890-893, XP031405139, ISBN: 978-1-4244-2341-5**

EP 2 941 067 B1

**Description**

L'invention concerne un estimateur de fréquence pour transmission et réception de données en temps réel dans des conditions aéronautiques, par exemple, selon le standard DVB-S2, ou un format équivalent. Elle trouve son application pour estimer un décalage de fréquence induit par l'effet Doppler de manière suffisamment précise dans un contexte à faible rapport signal à bruit et avec des accélérations de Doppler fortes.

L'invention concerne le problème de la synchronisation de fréquence dans un contexte aéroporté, présentant notamment de faibles rapports signaux à bruit et des accélérations de Doppler pouvant atteindre des valeurs considérées comme importantes dans le domaine. L'effet Doppler est causé par le mouvement de l'avion par rapport au satellite et le canal aéronautique est perturbé par le décalage en fréquence de la porteuse reçue appelé effet Doppler.

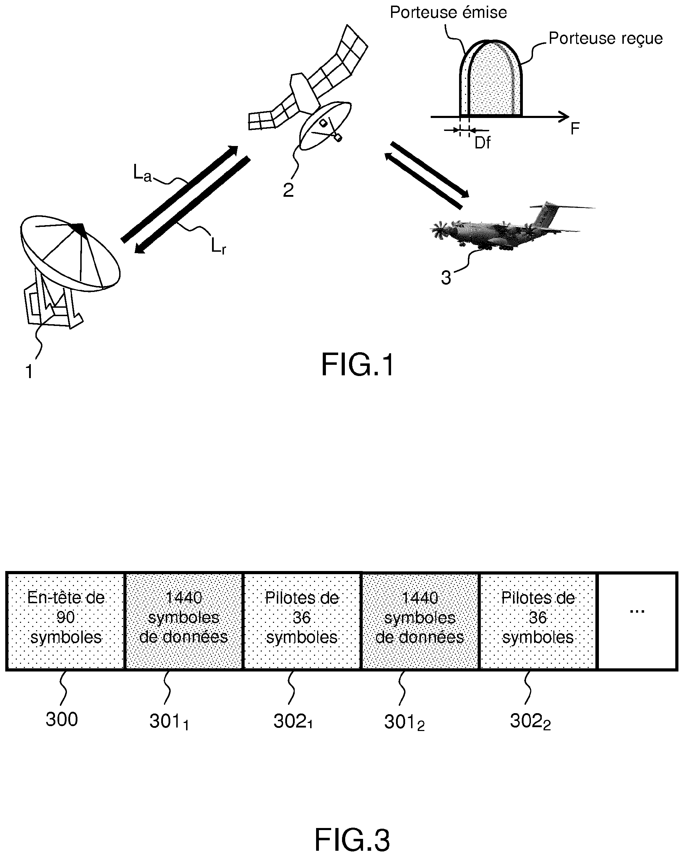

La figure 1 schématise une chaîne de transmission comportant une station sol, 1, un satellite 2 et un système aéroporté 3 ou avion. La voie aller $L_a$ est définie comme celle allant de la station sol 1 au système aéroporté, tel un avion; la voie retour $L_r$ est définie comme la voie allant de l'avion 3 à la station sol 1, en passant par le satellite 2. L'effet Doppler est causé par le mouvement de l'avion 3 par rapport au satellite 2. Il est possible de lier l'effet Doppler et la variation d'effet Doppler à la vitesse et à l'accélération de l'avion.

Soit $f_{em}$ la fréquence du système émetteur et $v_{em}$ sa vitesse, $f_{rec}$ la fréquence du récepteur et $v_{rec}$ sa vitesse. La relation entre les deux fréquences s'exprime alors en fonction de la célérité $c$ de la lumière :

$$f_{rec} = \frac{c - v_{rec}}{c - v_{em}} f_{em}$$

Le satellite pouvant être considéré comme immobile vis-à-vis de l'avion, on obtient pour la différence de fréquence $\Delta f$ entre l'émetteur et le récepteur :

$$f_{em} - f_{rec} = \Delta f = \frac{v_{rec}}{c} f_{em}$$

Il est alors possible de lier $D_{max}$ l'effet Doppler maximal et $V_{max}$ la variation maximale de l'effet Doppler à $S_{max}$ la vitesse maximale de l'avion et $A_{max}$ l'accélération maximale de l'avion de la manière suivante : $D_{max} = \frac{S_{max}}{c} f_{em}$ exprimé en Hz $v_{max} = \frac{f_{em}}{c} A_{max}$ exprimé en Hz/s Les conditions aéronautiques de « pire cas » considérées ici sont les suivantes :

- une vitesse maximale de l'avion de 0.97 Mach correspondant à la vitesse de croisière d'un avion de ligne,
- une accélération maximale de l'avion de 2 g correspondant à l'accélération maximale atteignable par un avion de ligne lors :

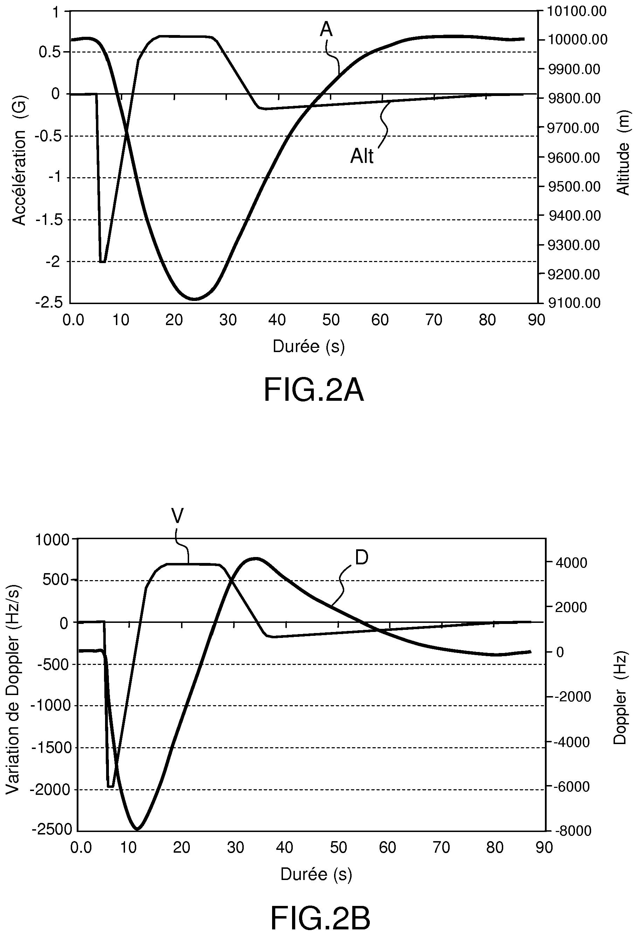

  ∘ d'un décollage et d'un atterrissage orienté dans la direction du satellite,
  ∘ d'un virage serré avec l'accélération radiale orientée dans la direction du satellite,
  ∘ d'un trou d'air avec le satellite au zénith par rapport à l'avion. Sur les deux graphiques des figures 2A et 2B sont présentés respectivement, l'accélération A et la variation d'altitude Alt en présence d'un trou d'air, ainsi que l'effet Doppler D et la variation d'effet Doppler courbe induite V.

Les caractéristiques de transmission radiofréquence RF sont les suivantes :

- une fréquence porteuse maximale fixée à 30 GHz, typique de la bande Ka, gamme de fréquence la plus élevée utilisée dans les satellites de télécommunications,
- un débit symbole minimal, fixé à 1 Mbaud correspondant aux débits symboles minimaux utilisés dans les communications par satellites en bande Ka.

On détermine, pour l'effet Doppler maximal $D_{max}$ et la variation maximale de l'effet Doppler $V_{max}$ les valeurs suivantes :

$$D_{max} = 33kHz \text{ et } V_{max} = 1962 Hz/s.$$

En normalisant ces valeurs par rapport au rythme symbole $R_s$ de la trame, on obtient le Doppler maximal normalisé $D_{max}^{norm}$ et la variation de Doppler normalisée $V_{max}^{norm}$ :

$$\begin{cases} D_{max}^{norm} = \dfrac{D_{max}}{R_S} \\ V_{max}^{norm} = \dfrac{V_{max}}{R_S{}^2} \end{cases}$$

$$D_{max}^{norm} = 0.033 symb^{-1} \text{ et } V_{max}^{norm} = 1.962 * 10^{-9} symbs^{-2}$$

$R_s$ : symboles/s ; $V_{max}$ : (Hz.s⁻¹) ; $D_{max}^{norm}$ : symbs⁻¹, $V_{max}^{norm}$ : symbs⁻².

La figure 3 représente la structure d'une trame DVB-S2 composée d'un en-tête de 90 symboles, 300, d'un premier bloc $301_1$ de 1440 symboles de données suivi d'un premier bloc $302_1$ de pilotes de 36 symboles, puis un deuxième bloc $301_2$ de 1440 symboles de données suivi d'un deuxième bloc $302_2$ de pilotes de 36 symboles, et ainsi de suite.

Dans le contexte aéronautique, en bande Ka, la structure standardisée des trames DVB-S2 associée aux mécanismes de synchronisation de fréquence préconisés dans les directives ETSI TR 102 376 V1.1.1, « Technical Report, DVB, User Guidelines for the second generation system for Broadcasting, Interactive Services, New Gathering and other Broadband Satellite Applications DVB-S2 », ne permettent pas de fonctionner pour des rythmes symboles faibles, inférieurs à 5Mbaud, pour un rapport signal à bruit inférieur à 5 dB, valeur typique du domaine.

Dans ce cas d'application, le Doppler résiduel maximal après estimation de Doppler doit engendrer un déphasage maximal de $\pi$ entre deux blocs pilotes afin de prévenir les ambigüités de phase. Ceci implique une résolution fréquentielle maximale $\Delta_f^{Max}$ égale à

$$\Delta_f^{Max} = \frac{\pi}{2 * \pi * (1440 + 36)} * R_s = \frac{1}{2 * 1476} * R_s = 3.38 * 10^{-4} * R_s$$

avec 1440 symboles de données, 36 symboles pilotes pour la trame DVB-S2.

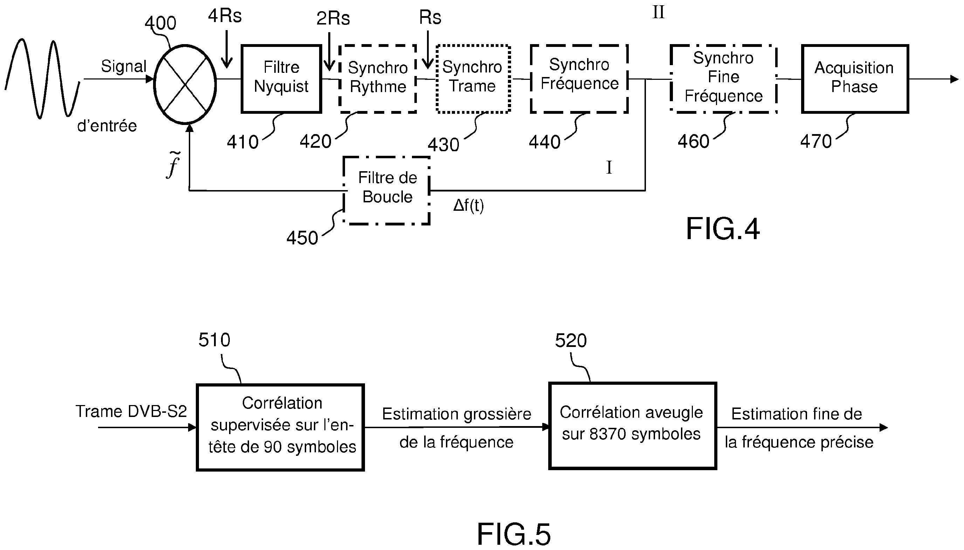

La figure 4 schématise un exemple d'estimation de fréquence selon l'art antérieur au niveau d'un récepteur. La synchronisation du signal en fréquence se déroule en deux étapes, une première synchronisation grossière est effectuée par une structure bouclée I et une seconde synchronisation plus fine est effectuée en mode commande en boucle ouverte ou « feed-forward », II. Le signal d'entrée reçu par le récepteur passe dans un mélangeur 400 qui reçoit aussi la valeur estimée de fréquence permettant une correction de la fréquence lorsque le dispositif est en fonctionnement. Le signal passe à travers un ensemble comprenant un bloc filtre de Nyquist, 410, un module de synchronisation rythme 420, un module de synchronisation trame 430, un premier module de synchronisation fréquence 440 dont la sortie est reliée d'une part à un module de synchronisation fine 406 suivi d'un module d'acquisition de phase 470 et d'autre part à un filtre de boucle 460.

Le schéma de synchronisation de boucle I comprend le module de synchronisation fréquence 440 et le module 450 du filtre de boucle. Le module de synchronisation fréquence effectue une estimation de la fréquence du signal $\tilde{f}$ selon la formule:

$$\tilde{f} = \arg\left(z_k z_{k-2}^*\right)$$

avec $z_k = r_k a_k^*$ où $r_k$ est l'échantillon r de données reçu à l'instant $k$, $a_k^*$ le conjugué du symbole de référence à ce même instant k et arg, l'argument d'un nombre complexe. Cette estimation, très sensible au bruit, est ensuite filtrée par le filtre de boucle de premier ordre, puis injectée en tant que correction en entrée du filtre de réception de Nyquist.

La largeur de bande de boucle du filtre de boucle est un paramètre déterminant dans le processus de première synchronisation de fréquence :

- elle est proportionnelle à la vitesse de convergence de la synchronisation,
- elle est également proportionnelle à la sensibilité de l'estimation au bruit.

En résumé, plus la bande de boucle est large, plus elle converge rapidement vers le décalage en fréquence, mais elle est dans le même temps plus sensible au niveau de bruit.

Le bloc suivant de synchronisation fine 440 effectue une seconde estimation de la fréquence du signal en utilisant un algorithme fonctionnant en mode supervisé: il utilise les champs de référence de la trame DVB-S2 (*en-tête* et pilotes) pour effectuer son estimation.

Pour mémoire, il est possible d'estimer l'auto corrélation $R(m)$ d'un signal x pour un indice m par $R_l(m)$ sur une séquence de taille N :

$$R_l(m) = \frac{1}{N-m} \sum_{k=m+1}^{N} x(k)x^*(k-m)$$

L'algorithme supervisé issu de l'algorithme de Luise & Reggianini connu de l'homme du métier moyenne ces corrélations sur un nombre $L$ de blocs pilotes. Les corrélations sont effectuées sur la moitié de la longueur d'un bloc pilote $N = \frac{L_0}{2}$, avec $L_0$ la longueur d'un bloc pilote :

$$\tilde{f} = \frac{1}{\pi T_s(N+1)} \arg\left(\sum_{l=1}^{L}\sum_{m=1}^{N} R_l(m)\right)$$

avec

$T_s$ : temps symbole
$L_0$ : longueur d'un bloc pilote
i : indice de l'estimée de l'autocorrélation
N : $L_0/2$ : nombre d'autocorrélations réalisés par bloc pilote
l: indice du bloc pilote
L : nombre de blocs pilotes sur lequel est réalisée l'estimée de fréquence. Cette correction de fréquence laisse apparaitre un second compromis quant à la valeur du nombre $L$ de blocs pilotes sur lesquels moyenner les corrélations : il est proportionnel à la précision de l'estimée, il est inversement proportionnel à sa réactivité.

Un tel schéma ne permet toutefois pas de trouver un réglage de la synchronisation de fréquence permettant notamment de suivre les variations de fréquence du canal aéronautique, de fournir une estimation de fréquence suffisamment précise même à faible rapport signal à bruit, 0dB. Les écarts de fréquence entre la fréquence estimée $\tilde{f}$ et la fréquence réelle $f_{réel}$ peuvent apparaître et être à l'origine de décrochages et donc de pertes de trames dans la communication.

Les estimateurs connus de l'art antérieur sont généralement basés sur des algorithmes supervisés utilisant des informations connues, telles que l'en-tête et les blocs pilotes de la trame DVB-S2, ce qui ne permet pas de conjuguer une estimée du Doppler suffisamment précise pour fonctionner selon le standard DVB-S2 et une réactivité suffisante pour supporter les fortes variations de Doppler dû au déplacement de l'avion.

Le document de RYU et al intitulé « Hardware efficient frequency estimator based on data-aided algorithm for digital video broadcasting system » décrit un estimateur DA bouclé et moyenné dans le temps.

Le document US 2008/0211719 décrit un algorithme d'estimation de la fréquence aveugle utilisant les pilotes.

Le dispositif, objet de l'invention, utilise notamment dans un premier temps un estimateur de fréquence supervisé sur l'en-tête de données connues afin d'en déduire une estimée grossière de la fréquence $\widehat{\Delta fDA}$, précise à $+/-\widetilde{\Delta f}$.

Dans un second temps, le dispositif va estimer la fréquence de manière précise en exécutant un algorithme en aveugle sur l'ensemble des données inconnues sur une plage de recherche correspondant à un intervalle autour de la fréquence estimée $\widehat{\Delta fDA}$ lors de la première étape. Ceci permet avantageusement de combiner la robustesse d'une estimation supervisée et la précision d'une estimation aveugle et permet d'obtenir une estimée de la fréquence très précise sur une durée d'estimation très courte et ainsi de suivre des variations très importantes dues au déplacement de l'avion.

L'expression « algorithme aveugle » désigne dans la présente description, un algorithme utilisant les données par nature inconnues transmises dans la trame de communication. Un algorithme supervisé va travailler sur des données connues.

L'invention concerne un procédé d'estimation d'une valeur de fréquence pour une communication aéronautique entre une première station et un système aéroporté en mouvement par rapport à la première station, les données étant transmises sous la forme d'une succession de trames, une trame comprenant au moins un premier champ d'en-tête de données connues suivi d'un ou plusieurs champs de données inconnues caractérisé en ce qu'il comporte au moins les étapes suivantes :

Etape 1: exécuter une corrélation supervisée sur les données connues de l'en-tête, et estimer un premier intervalle de fréquence centré sur une fréquence estimée $\widetilde{\Delta fDA}$ , avec une précision de $+/-\widetilde{\Delta f}$

Etape 2: réaliser une corrélation aveugle sur au moins l'ensemble des données inconnues d'un champ de données en recherchant un pic de corrélation sur l'intervalle centré sur la fréquence $\widetilde{\Delta fDA} +/-\widetilde{\Delta f}$, déterminé à l'étape 1, et retenir la fréquence correspondant au pic de corrélation.

Selon une variante de réalisation, la trame est une trame de type DVB-S2 modulée avec une modulation par changement de phase comprenant un champ de pilotes disposé avant un champ de données et en ce qu'il comporte au moins les étapes suivantes :

Etape 1 : exécuter une corrélation supervisée par transformée de Fourier sur l'en-tête DVB-S2, pour obtenir un intervalle centré sur une fréquence estimée $\widetilde{\Delta fDA}$ avec une précision de $+/-\widetilde{\Delta f},$

Etape 2 : utiliser les symboles de la trame modulée et utiliser la transformée de Fourier des symboles modulés de la trame courte mis à la puissance 4, correspondant à l'intervalle centrée sur lafréquence $\widetilde{\Delta fDA} +/-\widetilde{\Delta f}$ défini à l'étape 1, déterminer la fréquence correspondant au maximum de la norme de la transformée de Fourier et en déduire la valeur de l'effet Doppler.

Le procédé peut comporter les étapes suivantes :

Etape 1 : estimer la fréquence $\widetilde{\Delta fDA},$

$$\widetilde{\Delta fDA} = \text{indiceMax}\left(\left|DFT\left(R(k)*conj\left(Ref(k)\right)+BABG(k)\right)\right|^2\right)$$

$$= \text{indiceMax}\left(\left|DFT\left(e^{i*2*\pi*\Delta_f*t}*rect_{90}(t)+BABG(t)\right)\right|^2\right)$$

$$= \text{indiceMax}\left(\left|sinc_{90*\pi}\left(f-\Delta_f\right)+BABG(f)\right|^2\right)$$

avec :

- conj() : fonction conjugué d'un nombre complexe
- DFT : transformée de Fourier
- k : indice d'un symbole
- t : instant donné
- $\Delta_f$ : Dopler fréquentiel à estimer
- $rect_{90}(t)$ : Fonction rectangle de longueur 90
- $sinc_{90*\pi}(f)$ : Fonction sinus cardinal de largeur $90*\pi$
- Ref(k) symboles de référence des symboles R(k) de l'en-tête reçus avec $1 \leq k \leq 90$

Etape 2 : estimer la valeur du Doler à partir de l'expression

$$\Delta \widetilde{fNDA} = \frac{\text{indiceMaxNDA}(|(DFT((R(k) + BABGEq(k))^4)|^2)}{4}$$

$$= \frac{\text{indiceMaxNDA}\left(\left|DFT\left(e^{i*2*\pi*4*\Delta_f*t} * rect_{NDALength}(t) + BABGEq(t)\right)\right|^2\right)}{4}$$

$$= \frac{\text{indiceMaxNDA}\left(\left|sinc_{NDALength*\pi}(f - 4 * \Delta_f) + BABGEq(f)\right|^2\right)}{4}$$

avec :

- NDALength : longueur sur laquelle est réalisée l'estimée de fréquence aveugle,
- Rect_{NDALength}(t) : Fonction rectangle de longueur NDALength,
- Sinc_{NDALength*π}(f) : Fonction sinus cardinal de largeur NDALength*π,
- *BABGEq(f)* : Bruit additif blanc gaussien équivalent issu de la mise à la puissance 4 du signal bruité Symbs-QPSK+BABG,
- indiceMaxNDA : Fréquence appartenant à la plage fréquentielle $plageFreqNDA = \widetilde{\Delta fDA} \pm \widetilde{\Delta f}$ pour laquelle la norme de la transformée de Fourier est maximale.

La trame est, par exemple, modulée par une modulation BPSK ou QPSK et la valeur de NDALength est fixée à 8370 pour un SNR de 0 dB.

Les étapes du procédé s'appliquent pour un NDALength égal à $\dfrac{8370}{SNRLin^2}$ où SNRLin correspond au rapport signal à bruit SNR exprimé en linéaire.

Selon un mode de réalisation, on détermine une estimée de fréquence pour chaque trame DVB-S2 constituant la communication.

L'invention concerne aussi un dispositif pour estimer un Doppler dans un système de communication aéronautique comprenant au moins une première station et un système aéroporté en mouvement par rapport à la première station, les données étant transmises sous la forme d'une succession de trames, une trame comprenant au moins un premier champ d'en-tête de données connues suivi d'un ou plusieurs champs de données inconnues, le dispositif comprenant au moins:

- un premier module adapté à réaliser une corrélation supervisée sur les données connues de l'en-tête, et estimer un premier intervalle de fréquence centré sur une fréquence $\widetilde{\Delta fDA}$ avec une précision de +/- $\widetilde{\Delta f}$,
- un deuxième module adapté à réaliser une corrélation aveugle sur au moins l'ensemble des données inconnues d'un champ de données en recherchant un pic de corrélation sur l'intervalle de fréquence $\widetilde{\Delta fDA}$ +/-$\widetilde{\Delta f}$, déterminé à l'étape 1, et en retenant la fréquence correspondant au pic de corrélation.

Les données sont des données DVB-S2 modulées QPSK ou BPSK.

Le premier module d'estimation et le deuxième module sont, par exemple, réalisés en technologie FPGA.

D'autres caractéristiques et avantages de la présente invention seront mieux compris à la lecture de la description qui suit, donnée à titre illustratif et nullement limitatif, annexée des figures qui représentent :

- la figure 1, un exemple de chaîne de transmission,
- la figure 2A et la figure 2B, respectivement, une illustration de l'accélération A et la variation d'altitude Alt en présence d'un trou d'air ainsi que l'effet Doppler D et la variation d'effet Doppler courbe induite V,
- la figure 3, une trame DVB-S2,
- la figure 4, un exemple de structure de synchronisation selon l'art antérieur,
- la figure 5, un exemple de structure de l'estimateur de fréquence selon l'invention, disposé au niveau d'un récepteur DVB-S2.

L'exemple qui suit va être donné pour l'estimation de fréquence burstée et non dans le cas d'une trame DVB-S2 modulation par changement de phase QPSK (Quadrature Phase Shift Keying), afin de mieux faire comprendre l'objet de l'invention, et sans limiter sa portée à la structure de la trame DVB-S2. L'invention peut aussi d'appliquer pour des communications pour lesquelles les trames utilisées comportent un en-tête ou champs de données connues suivi de plusieurs champs de données non connues. Les données inconnues sont par exemple modulées en BPSK (Binary Phase shift Keying), ou QPSK. Dans l'exemple détaillé ci-après, le système fonctionnera pour des rapports signaux à bruits compris, par exemple, entre 0 et 6 dB pour satisfaire à la norme Arinc 791 connue.

Le procédé et l'estimateur de fréquence selon l'invention comporte un premier estimateur de fréquence supervisé et un deuxième estimateur de fréquence aveugle. L'estimateur de fréquence selon l'invention est implémenté au sein d'un récepteur DVB-S2 positionné par exemple au niveau de la station satellite ou la station sol et en utilisant la technologie de circuit programmable ou FPGA (abrégé anglo-saxon de field-programmable gate array), par exemple.

Le premier module d'estimation de fréquence ou premier estimateur met en oeuvre un algorithme qui réalise une corrélation supervisée par transformée de Fourier sur l'en-tête DVB-S2 de 90 symboles.

L'algorithme estime la fréquence, en calculant la fréquence correspondant au maximum de la norme de la transformée de Fourier des 90 symboles (R(k) avec 1≤k≤90) reçus de l'en-tête DVB-S2 corrélés avec les symboles de références (Ref(k) avec 1≤k≤90) de ce même en-tête.

Les symboles k reçus sont les suivants :

- R(k)=(Ref(k)+BABG(k))*exp(i*2*$\pi\Delta_f$*k) avec:

  ◦ Ref(k) : symboles de référence des symboles R(k)
  ◦ BABG: bruit additif blanc gaussien
  ◦ $\Delta_f$: Doppler fréquentiel à estimer.

L'estimation de fréquence $\widetilde{\Delta fDA}$ au niveau du premier module d'estimation ou estimateur est effectuée de la manière suivante :

$$\widetilde{\Delta fDA} = \text{indiceMax}\left(\left|DFT\left(R(k) * conj\left(Ref(k)\right) + BABG(k)\right)\right|^2\right)$$

$$= \text{indiceMax}\left(\left|DFT\left(e^{i*2*\pi*\Delta_f*t} * rect_{90}(t) + BABG(t)\right)\right|^2\right)$$

$$= \text{indiceMax}\left(\left|sinc_{90*\pi}\left(f - \Delta_f\right) + BABG(f)\right|^2\right)$$

avec :

- conj() : fonction conjugué d'un nombre complexe
- DFT : transformée de Fourier
- k : indice d'un symbole
- t : instant donné
- f : fréquence donnée
- $\Delta_f$ : Doppler fréquentiel à estimer
- $rect_{90}(t)$ : Fonction rectangle de longueur 90
- $sinc_{90\pi}(f)$ : Fonction sinus cardinal de largeur 90*$\pi$.

La plage de fonctionnement est au maximum de +-0.5*Rs car c'est un estimateur supervisé.

A l'issu du premier module d'estimation, présentant une forte résistance au bruit, on obtient une valeur de fréquence $\widetilde{\Delta fDA}$.

Le second module d'estimation ou second estimateur est un estimateur de fréquence aveugle à très haute résolution fréquentielle qui va travailler sur l'intervalle de fréquence suivant :

$$plageFreqNDA = \left[\widetilde{\Delta fDA} - \widetilde{\Delta f}; \widetilde{\Delta fDA} + \widetilde{\Delta f}\right]$$

Cette plage fréquentielle sur laquelle est cherché le pic maximal est déterminée par la précision de l'estimateur de fréquence supervisé : elle est donc centrée sur $\widetilde{\Delta fDA}$ et vaut $\pm 0.0025$ Rs en normalisé (2.5 kHz pour un $R_s$ de 1 Mbaud) qui correspond à la précision pire cas de l'estimateur supervisé à 0 dB. Ainsi à 0 dB :

$$plageFreqNDA = \left[\widetilde{\Delta fDA} - 0.0025; \widetilde{\Delta fDA} + 0.0025\right]$$

Lorsque le SNR est de 0 dB, l'algorithme aveugle utilise tous les symboles de la trame courte QPSK avec pilotes c'est-à-dire 8370 symboles. L'algorithme consiste, à 0 dB, à utiliser la transformée de Fourier des 8370 symboles QPSK mis à la puissance 4 afin d'estimer le Doppler en calculant la fréquence f correspondant au maximum de la norme de cette transformée de Fourier. Le Doppler correspond à cette fréquence estimée divisée par 4.

Si on considère les symboles QPSK reçus R(k) avec $1 \leq k \leq$ NDALength :

- R(k)=(SymbsQPSK(k)+BABG(k))*exp(i*2*$\pi\Delta_f$*k), avec :

  ○ SymbsQPSK=exp(i*($\pi$/4+n*$\pi$/2)) avec n=[0,1,2,3],
  ○ NDALength : longueur sur laquelle est réalisée l'estimée de fréquence aveugle. NDALength est fixée à 8370 lorsque le SNR est de 0 dB,
  ○ BABG: bruit additif blanc gaussien,
  ○ $\Delta_f$: Doppler fréquentiel à estimer.

L'estimation de fréquence $\widetilde{\Delta fNDA}$ au niveau du second module d'estimation ou estimateur est effectuée de la manière suivante :

$$\widetilde{\Delta fNDA} = \frac{\text{indiceMaxNDA}(|(DFT((R(k) + BABGEq(k))^4)|^2)}{4}$$

$$= \frac{\text{indiceMaxNDA}\left(\left|DFT\left(e^{i*2*\pi*4*\Delta_f*t} * rect_{NDALength}(t) + BABGEq(t)\right)\right|^2\right)}{4}$$

$$= \frac{\text{indiceMaxNDA}\left(\left|sinc_{NDALength*\pi}(f - 4*\Delta_f) + BABGEq(f)\right|^2\right)}{4}$$

avec :

- Rect$_{NDALength}$(t) : Fonction rectangle de longueur NDALength,
- Sinc$_{NDALength*\pi}$(f) : Fonction sinus cardinal de largeur NDALength*$\pi$,
- *BABGEq(f)* : Bruit additif blanc gaussien équivalent issu de la mise à la puissance 4 du signal bruité SymbsQPSK+BABG,
- indiceMaxNDA : Fréquence appartenant à la plage fréquentielle *plageFreqNDA* pour laquelle la norme de la transformée de Fourier est maximale.

La plage de fonctionnement maximale est de +-0.125*$R_s$ car c'est un estimateur aveugle qui prend comme entrée un signal élevé à la puissance 4.

La figure 5 schématise une structure d'un estimateur de fréquence selon l'invention implémenté par exemple au niveau du récepteur DVB-S2 de la station sol, qui comporte deux modules adaptés à exécuter les étapes suivantes :

• dans un premier temps, 510, une estimation grossière et supervisée de la fréquence est effectuée sur l'en-tête DVB-S2 de 90 symboles : on obtient alors une première estimée de fréquence précise à +-2.5 kHz (pour un Rs de 1 Msps) ;
• dans un second temps, 520, on effectue une corrélation aveugle sur les 8370 symboles de la trame courte QPSK sur une plage de +-2.5 kHz issue de l'estimation grossière de fréquence. On obtient alors une estimation précise à 20 Hz de l'erreur de fréquence.

L'utilisation de l'estimateur aveugle sur une plage réduite de fréquence, permet de diviser le FER dû à l'estimateur aveugle par le rapport entre la plage totale de fonctionnement de l'estimateur et cette plage réduite. Ainsi dans le cas présent, la plage de fonctionnement de l'estimateur étant de +-125 kHz, on divise le FER par 50 (125/2.5=50).

Cela permet de passer d'un FER supérieur à $10^{-5}$ à un FER proche de $10^{-6}$ à 0 dB.

L'estimateur de fréquence implémenté selon la présente invention permet d'atteindre un FER inférieur à $10^{-5}$ à 0 dB dans des conditions aéronautiques défavorables. Pour les valeurs de rapport signal à bruit SNRs supérieurs à 0 dB, il est possible d'obtenir le même niveau de performances tout en réduisant la taille de l'estimation aveugle.

Les étapes du procédé qui viennent d'être décrites s'appliquent dans le cas où la longueur sur laquelle est

$$NDALength = \frac{8370}{SNRLin^2}$$

estimée la fréquence correspond à (où SNRLin correspond au rapport signal à bruit SNR en linéaire), les performances (FER inférieur à $10^{-5}$ (frequency error rate) dans les conditions pires cas de Doppler aéronautique) restent les mêmes pour les SNR typiques de la QPSK DVB-S2 (entre 0 et 7 dB).

L'invention présente notamment l'avantage de fournir une estimée de la fréquence de manière très précise sur une durée d'estimation très courte, ce qui permet de suivre des variations très importantes de la fréquence dues au déplacement de l'avion. Elle peut être utilisée de manière totalement « burstée », c'est-à-dire que pour chaque trame DVB-S2, une estimée de fréquence est fournie, cette dernière étant indépendante de l'estimée obtenue sur la trame précédente. Ainsi, si l'estimée de fréquence sur une trame est erronée, cela n'a pas d'impact sur les autres trames et la perte se limite à la trame dont l'estimée est erronée.

## Revendications

1. Procédé d'estimation d'une valeur de fréquence pour une communication aéronautique entre une première station (1) et un système aéroporté (3) en mouvement par rapport à la première station, les données étant transmises sous la forme d'une succession de trames, une trame comprenant au moins un premier champ d'en-tête de données connues (300) suivi d'un ou plusieurs champs de données inconnues ($301_1$) comportant l'étape suivante

   Etape 1: exécuter une corrélation supervisée sur les données connues (300) de l'en-tête, et estimer un premier intervalle de fréquence centré sur une fréquence estimée $\widetilde{\Delta fDA}$ et précise de $+/-\widetilde{\Delta f}$,

   **caractérisé en ce qu'**il comporte en outre l'étape suivante:

   Etape 2: réaliser une corrélation aveugle sur au moins l'ensemble des données inconnues d'un champ de données ($301_1$), en recherchant un pic de corrélation sur l'intervalle centré sur la fréquence $\widetilde{\Delta fDA} +/-\widetilde{\Delta f}$, déterminé à l'étape 1, et retenir la fréquence correspondant au pic de corrélation.

2. Procédé selon la revendication 1 **caractérisé en ce que** la trame est une trame de type DVB-S2 modulée avec une modulation par changement de phase comprenant un champ de pilotes ($302_1$) disposé avant un champ de données ($301_1$) et **en ce qu'**il comporte au moins les étapes suivantes :

   Etape 1 : exécuter une corrélation supervisée par transformée de Fourier sur l'en-tête DVB-S2, pour obtenir un intervalle centré sur une fréquence estimée $\widetilde{\Delta fDA}$ avec une précision de $+/-\widetilde{\Delta f}$,
   Etape 2 : utiliser les symboles de la trame modulée et utiliser la transformée de Fourier des symboles modulés de la trame courte mis à la puissance 4, correspondant à l'intervalle centrée sur la fréquence $\widetilde{\Delta fDA}+/-\widetilde{\Delta f}$ défini à l'étape 1, déterminer la fréquence correspondant au maximum de la norme de la transformée de Fourier et en déduire la valeur de l'effet Doppler.

3. Procédé selon la revendication 2 **caractérisé en ce qu'**il comporte au moins les étapes suivantes :

   Etape 1 : estimer la fréquence $\widetilde{\Delta fDA}$ ,

$$\widetilde{\Delta fDA} = \text{indiceMax}\left(\left|DFT\left(R(k) * conj\left(Ref(k)\right) + BABG(k)\right)\right|^2\right)$$

$$= \text{indiceMax}\left(\left|DFT\left(e^{i*2*\pi*\Delta_f*t} * rect_{90}(t) + BABG(t)\right)\right|^2\right)$$

$$= \text{indiceMax}\left(\left|sinc_{90*\pi}\left(f - \Delta_f\right) + BABG(f)\right|^2\right)$$

avec :

- conj() : fonction conjugué d'un nombre complexe
- DFT : transformée de Fourier
- k : indice d'un symbole
- t : instant donné
- $\Delta_f$ : Dopler fréquentiel à estimer
- $rect_{90}(t)$ : Fonction rectangle de longueur 90
- $sinc_{90*\pi}(f)$ : Fonction sinus cardinal de largeur 90*π
- Ref(k) symboles de référence des symboles R(k) de l'en-tête reçus avec $1 \leq k \leq 90$

Etape 2 : estimer la valeur du Doppler à partir de l'expression

$$\widetilde{\Delta fNDA} = \frac{\text{indiceMaxNDA}(|(DFT((R(k) + BABGEq(k))^4)|^2)}{4}$$

$$= \frac{\text{indiceMaxNDA}\left(\left|DFT\left(e^{i*2*\pi*4*\Delta_f*t} * rect_{NDALength}(t) + BABGEq(t)\right)\right|^2\right)}{4}$$

$$= \frac{\text{indiceMaxNDA}\left(\left|sinc_{NDALength*\pi}\left(f - 4 * \Delta_f\right) + BABGEq(f)\right|^2\right)}{4}$$

avec :

- NDALength : longueur sur laquelle est réalisée l'estimée de fréquence aveugle,
- $Rect_{NDALength}(t)$ : Fonction rectangle de longueur NDALength,
- $Sinc_{NDALength*\pi}(f)$ : Fonction sinus cardinal de largeur NDALength*π,
- *BABGEq(f)* : Bruit additif blanc gaussien équivalent issu de la mise à la puissance 4 du signal bruité SymbsQPSK+BABG,
- indiceMaxNDA : Fréquence appartenant à la plage fréquentielle *plageFreqNDA* pour laquelle la norme de la transformée de Fourier est maximale.

4. Procédé selon l'une des revendications 2 ou 3 **caractérisé en ce que** la trame est modulée par une modulation BPSK ou QPSK.

5. Procédé selon la revendication 4 **caractérisé en ce que** la valeur de NDALength est fixée à 8370 pour un SNR de 0 dB.

6. Procédé selon la revendication 5 **caractérisé en ce que** la valeur de NDALength est égale à $\dfrac{8370}{SNRLin^2}$ où SNRLin correspond au rapport signal à bruit SNR exprimé en linéaire.

7. Procédé selon l'une des revendications 2 à 6 **caractérisé en ce que** l'on détermine une estimée de fréquence pour chaque trame DVB-S2 constituant la communication.

8. Dispositif pour estimer un Doppler dans un système de communication aéronautique comprenant au moins une première station (1) et un système aéroporté (3) en mouvement par rapport à la première station, les données étant transmises sous la forme d'une succession de trames, une trame comprenant au moins un premier champ d'entête de données connues (300) suivi d'un ou plusieurs champs de données inconnues ($301_1$), le dispositif comprenant

au moins:

    • un premier module (510) adapté à réaliser une corrélation supervisée sur les données connues de l'en-tête, et à estimer un premier intervalle de fréquence centré sur une fréquence estimée $\widetilde{\Delta fDA}$ avec une précision de $+/-\widetilde{\Delta f}$, **caractérisé en ce qu'**il comporte en outre:

    • un deuxième module (520) adapté à réaliser une corrélation aveugle sur au moins l'ensemble des données inconnues d'un champ de données ($301_1$), en recherchant un pic de corrélation sur l'intervalle de ladite fréquence estimée $\widetilde{\Delta fDA}$ $+/-\widetilde{\Delta f}$, et en retenant la fréquence correspondant au pic de corrélation.

**9.** Dispositif selon la revendication 8 **caractérisé en ce que** les trames sont des données DVB-S2 modulées QPSK ou BPSK.

**10.** Dispositif selon l'une des revendications 8 à 9 **caractérisé en ce que** le premier module d'estimation et le deuxième module sont réalisés en technologie FPGA.

**Patentansprüche**

**1.** Verfahren zum Schätzen eines Frequenzwerts für eine aeronautische Kommunikation zwischen einer ersten Station (1) und einem in Bezug auf die erste Station bewegten fliegenden System (3), wobei die Daten in Form einer Serie von Frames übertragen werden, wobei ein Frame mindestens ein erstes Header-Feld aus bekannten Daten (300), gefolgt von einem oder mehreren Feldern aus unbekannten Daten ($301_1$) umfasst, umfassend den folgenden Schritt:

    Schritt 1: Ausführen einer überwachten Korrelation an den bekannten Daten (300) des Headers und Schätzen eines ersten Frequenzintervalls, das auf eine geschätzte Frequenz, $\widetilde{\Delta fDA}$ die $+/-\widetilde{\Delta f}$ genau ist, zentriert ist,

**dadurch gekennzeichnet, dass** es ferner den folgenden Schritt umfasst:

    Schritt 2: Durchführen einer blinden Korrelation an mindestens der Gesamtheit der unbekannten Daten eines Datenfelds ($301_1$) durch Suchen nach einer Korrelationsspitze in dem Intervall, das auf die Frequenz $\widetilde{\Delta fDA}$ $+/-\widetilde{\Delta f}$ zentriert ist und im Schritt 1 bestimmt wird, und Halten der Frequenz, die der Korrelationsspitze entspricht.

**2.** Verfahren nach Anspruch 1, **dadurch gekennzeichnet, dass** der Frame ein modulierter Frame vom Typ DVB-S2 mit einer Modulation durch Phasenwechsel ist, umfassend ein Pilotenfeld ($302_1$), das vor einem Datenfeld ($301_1$) angeordnet ist, und dass es mindestens die folgenden Schritte umfasst:

    Schritt 1: Ausführen einer überwachten Korrelation mittels Fourier-Transformation an dem DVB-S2-Header, um ein Intervall zu erhalten, das auf eine geschätzte Frequenz $\widetilde{\Delta fDA}$ mit einer Genauigkeit von $+/-\widetilde{\Delta f}$ zentriert ist,

    Schritt 2: Verwenden der Symbole des modulierten Frames und Verwenden der Fourier-Transformation der modulierten Symbole des kurzen Frames zur 4-ten Potenz, die dem auf die Frequenz $\widetilde{\Delta fDA}+/-\widetilde{\Delta f}$ zentrierten Intervall, das im Schritt 1 definiert ist, entsprechen, Bestimmen der Frequenz, die der maximalen Norm der Fourier-Transformation entspricht, und Abziehen des Werts des Dopplereffekts davon.

**3.** Verfahren nach Anspruch 2, **dadurch gekennzeichnet, dass** es mindestens die folgenden Schritte umfasst:

    Schritt 1: Schätzen der Frequenz $\widetilde{\Delta fDA}$,

$$\widehat{\Delta f DA} = \text{indiceMax}\left(\left|DFT\left(R(k) * conj(Ref(k)) + BABG(k)\right)\right|^2\right)$$

$$= \text{indiceMax}\left(\left|DFT\left(e^{i*2*\pi*\Delta_f*t} * rect_{90}(t) + BABG(t)\right)\right|^2\right)$$

$$= \text{indiceMax}\left(\left|sinc_{90*\pi}(f - \Delta_f) + BABG(f)\right|^2\right)$$

wobei:

- conj(): konjugierte Funktion einer komplexen Zahl
- DFT: Fourier-Transformation
- k: Kennziffer eines Symbols
- t: vorgegebener Zeitpunkt
- $\Delta_f$: zu schätzende Dopplerfrequenz
- $rect_{90}(t)$: Rechteckfunktion der Länge 90
- $sinc_{90*\pi}$ (f): Kardinalsinus-Funktion der Breite 90*$\pi$
- Ref(k) Referenzsymbole der R(k)-Symbole des Headers, erhalten mit 1≤k≤90

Schritt 2: Schätzen des Dopplerwerts auf Basis des Ausdrucks

$$\widehat{\Delta f NDA} = \frac{\text{indiceMaxNDA}\left(\left|(DFT((R(k) + BABGEq(k))^4)\right|^2\right)}{4}$$

$$= \frac{\text{indiceMaxNDA}\left(\left|DFT\left(e^{i*2*\pi*4*\Delta_f*t} * rect_{NDALength}(t) + BABGEq(t)\right)\right|^2\right)}{4}$$

$$= \frac{\text{indiceMaxNDA}\left(\left|sinc_{NDALength*\pi}(f - 4*\Delta_f) + BABGEq(f)\right|^2\right)}{4}$$

wobei:

- NDALength: Länge, an der die Blindfrequenzschätzung durchgeführt wird,
- $Rect_{NDALength}(t)$: Rechteckfunktion der Länge NDALength,
- $Sinc_{NDALength*\pi}(f)$: Kardinalsinus-Funktion der Breite NDALength*$\pi$,
- *BABGEq(f):* weißes Gaußsches Additivrauschen gleichwertig zur 4-ten Potenz des rauschenden Signals SymbsQPSK+BABG,
- indiceMaxNDA: Frequenz, die zum Frequenzbereich *FreqBereichNDA* gehört, an dem die Norm der Fourier-Transformationswert maximal ist.

4. Verfahren nach einem der Ansprüche 2 oder 3, **dadurch gekennzeichnet, dass** der Frame mittels einer BPSK- oder QPSK-Modulation moduliert wird.

5. Verfahren nach Anspruch 4, **dadurch gekennzeichnet, dass** der Wert von NDALength auf 8370 für ein SNR von 0 dB festgelegt ist.

6. Verfahren nach Anspruch 5, **dadurch gekennzeichnet, dass** der Wert von NDALength gleich $\frac{\widehat{8370}}{SNRLin^2}$ ist, wobei SNRLin dem linear ausgedrückten Rauschsignalverhältnis SNR entspricht.

7. Verfahren nach einem der Ansprüche 2 bis 6, **dadurch gekennzeichnet, dass** eine Frequenzschätzung für jeden die Kommunikation bildenden DVB-S2-Frame bestimmt wird.

8. Vorrichtung zum Schätzen eines Dopplers in einem aeronautischen Kommunikationssystem, umfassend mindestens eine erste Station (1) und ein in Bezug auf die erste Station bewegtes fliegendes System (3), wobei die Daten in der Form einer Serie von Frames übertragen werden, wobei ein Frame mindestens ein erstes Header-Feld aus bekannten Daten (300), gefolgt von einem oder mehreren Feldern aus unbekannten Daten ($301_1$) umfasst, wobei die Vorrichtung mindestens Folgendes umfasst:

- ein erstes Modul (510), das angepasst ist, um eine überwachte Korrelation an den bekannten Header-Daten durchzuführen und um ein erstes Frequenzintervall zu schätzen, das auf eine geschätzte Frequenz $\widetilde{\Delta fDA}$ mit einer Genauigkeit von $+/-\widetilde{\Delta f}$ zentriert ist, **dadurch gekennzeichnet, dass** es ferner Folgendes umfasst:

- ein zweites Modul (520), das angepasst ist, um durch Suchen einer Korrelationsspitze in dem Intervall der geschätzten Frequenz $\widetilde{\Delta fDA} +/-\widetilde{\Delta f}$ und Halten der der Korrelationsspitze entsprechenden Frequenz eine blinde Korrelation an mindestens der Gesamtheit von unbekannten Daten eines Datenfelds ($301_1$) durchzuführen.

9. Vorrichtung nach Anspruch 8, **dadurch gekennzeichnet, dass** die Frames QPSK- oder BPSK- modulierte DVB-S2-Daten sind.

10. Vorrichtung nach einem der Ansprüche 8 bis 9, **dadurch gekennzeichnet, dass** das erste Schätzungsmodul und das zweite Modul mittels FPGA-Technik hergestellt werden.

**Claims**

1. Method for estimating a frequency value for aeronautical communication between a first station (1) and an airborne system (3) moving in relation to the first station, the data being transmitted in the form of a succession of frames, a frame comprising at least one first header field of known data (300) followed by one or more fields of unknown data ($301_1$), comprising at least the following step:

Step 1: performance of a supervised correlation on the known data (300) of the header, and estimation of a first frequency range centred on an estimated frequency $\widetilde{\Delta fDA}$ having a precision of $+/-\widetilde{\Delta f}$,

Further comprising:

Step 2: production of a blind correlation on at least all of the unknown data of a field of data ($301_1$), by looking for a correlation peak over the range centered on the frequency $\widetilde{\Delta fDA} +/-\widetilde{\Delta f}$, as determined in step 1, and by retaining the frequency corresponding to the correlation peak.

2. Method according to Claim 1, **characterized in that** the frame is a frame of DVB-S2 type that is modulated with a modulation by change of phase comprising a field of pilots ($302_1$) that is arranged before a field of data ($301_1$) and **in that** it has at least the following steps:

Step 1: performance of a supervised correlation by Fourier transform on the DVB-S2 header, in order to obtain a range centered on an estimated frequency $\widetilde{\Delta fDA}$ having a precision of $+/-\widetilde{\Delta f}$,
Step 2: use of the symbols of the modulated frame and use of the Fourier transform from the modulated symbols of the short frame that are raised to the power of 4, corresponding to the range centred on the frequency $\widetilde{\Delta fDA}+/- \widetilde{\Delta f}$ defined in step 1, determination of the frequency corresponding to the maximum of the norm of the Fourier transform and deduction of the value of the Doppler effect therefrom.

3. Method according to Claim 2, **characterized in that** it comprises at least the following steps:

Step 1: estimation of the frequency $\widetilde{\Delta fDA}$,

$$\widetilde{\Delta fDA} = \text{MaxIndex}\left(\left|DFT\left(R(k) * conj(Ref(k)) + BABG(k)\right)\right|^2\right)$$

$$= \text{MaxIndex}\left(\left|DFT\left(e^{i*2*\pi*\Delta_f*t} * rect_{90}(t) + BABG(t)\right)\right|^2\right)$$

$$= \text{MaxIndex}\left(\left|sinc_{90*\pi}(f - \Delta_f) + BABG(f)\right|^2\right)$$

where:

- conj(): conjugate function of a complex number
- DFT: Fourier transform
- k: index of a symbol
- t: given instant
- $\Delta_f$: Doppler frequency to be estimated
- $rect_{90}(t)$: rectangle function of length 90
- $sinc_{90*\pi}(f)$: cardinal sine function of width $90*\pi$
- Ref(k): reference symbols for the received symbols R(k) of the header where $1 \le k \le 90$
- BABG: additive white Gaussian noise

Step 2: estimation of the value of the Doppler from the expression

$$\widetilde{\Delta fNDA} = \frac{\text{MaxIndexNDA}(|(DFT((R(k) + BABGEq(k))^4)|^2)}{4}$$

$$= \frac{\text{MaxIndexNDA}\left(\left|DFT\left(e^{i*2*\pi*4*\Delta_f*t} * rect_{NDALength}(t) + BABGEq(t)\right)\right|^2\right)}{4}$$

$$= \frac{\text{MaxIndexNDA}\left(\left|sinc_{NDALength*\pi}(f - 4*\Delta_f) + BABGEq(f)\right|^2\right)}{4}$$

where:

- NDALength: length over which the blind frequency estimate is produced,
- $Rect_{NDALength}(t)$: rectangle function of length NDALength,
- $sinc_{NDALength*\pi}(f)$: cardinal sine function of width $NDALength*\pi$,
- *BABGEq(f)* : equivalent additive white noise stemming from raising to the power of 4 the noisy signal SymbsQPSK+BABG,
- MaxIndexNDA: frequency belonging to the frequency range *FreqRangeNDA* for which the norm of the Fourier transform is at a maximum.

4. Method according to either of Claims 2 and 3, **characterized in that** the frame is modulated by BPSK or QPSK modulation.

5. Method according to Claim 4, **characterized in that** the value of NDALength is fixed at 8370 for an SNR of 0 dB.

6. Method according to Claim 5, **characterized in that** the value of NDALength is equal to $\frac{8370}{SNRLin^2}$ , where SNRLin corresponds to the signal-to-noise ratio SNR expressed linearly.

7. Method according to one of Claims 2 to 6, **characterized in that** a frequency estimate is determined for each DVB-S2 frame constituting the communication.

8. Device for estimating a Doppler in an aeronautical communication system comprising at least a first station (1) and an airborne system (3) moving in relation to the first station, the data being transmitted in the form of a succession of frames, a frame comprising at least one first header field of known data (300) followed by one or more fields of unknown data ($301_1$), the device comprising at least:

• a first module (510) adapted to produce a supervised correlation on the known data of the header, and to estimating a first frequency range centred on an estimated frequency $\widetilde{\Delta fDA}$ having a precision of $+/-\widetilde{\Delta f}$, further comprising:

• a second module (520) that is adapted to producing a blind correlation on at least all of the unknown data of a field of data ($301_1$), by looking for a correlation peak over the range of said estimated frequency

$$\widetilde{\Delta fDA} \ +/-\widetilde{\Delta f},$$ and by retaining the frequency corresponding to the correlation peak.

9.  Device according to Claim 8, **characterized in that** the frames are QPSK- or BPSK-modulated DVB-S2 data.

10. Device according to either of Claims 8 and 9, **characterized in that** the first estimation module and the second module are produced using FPGA technology.

Porteuse émise

Porteuse reçue

$L_a$

$L_r$

2

3

1

# FIG.1

| En-tête de 90 symboles | 1440 symboles de données | Pilotes de 36 symboles | 1440 symboles de données | Pilotes de 36 symboles | ... |
|---|---|---|---|---|---|

300     $301_1$     $302_1$     $301_2$     $302_2$

# FIG.3

FIG.2A

FIG.2B

EP 2 941 067 B1

II

400

4Rs          2Rs          Rs

Signal
d'entrée

$\tilde{f}$

| Filtre
Nyquist | Synchro
Rythme | Synchro
Trame | Synchro
Fréquence | Synchro
Fine
Fréquence | Acquisition
Phase |

410          420          430          440          460          470

Filtre de
Boucle

Δf(t)

I

450

**FIG.4**

510                                          520

Trame DVB-S2 → | Corrélation
supervisée sur l'en-
tête de 90 symboles | → Estimation grossière
de la fréquence → | Corrélation aveugle
sur 8370 symboles | → Estimation fine de
la fréquence précise →

**FIG.5**

**RÉFÉRENCES CITÉES DANS LA DESCRIPTION**

**Documents brevets cités dans la description**

- US 20080211719 A

**Littérature non-brevet citée dans la description**

- Technical Report, DVB, User Guidelines for the second generation system for Broadcasting, Interactive Services, New Gathering and other Broadband Satellite Applications DVB-S2. *ETSI TR 102 376 V1.1.1*